# EUROPEAN PATENT APPLICATION

(11) **EP 3 929 029 A1**
(43) Date of publication of application: **29.12.2021**
(21) Application number: 20779760.6
(22) Date of filing: 18.02.2020
(51) Int. Cl.: B60L 58/10

(54) **VEHICLE BATTERY POWER CONTROL METHOD AND DEVICE, AND VEHICLE**

(30) Priority: 25.03.2019 CN 201910228853
(71) Applicant: Great Wall Motor Company Limited, Baoding, Hebei 071000 (CN)
(72) Inventor: WANG, Yinlei, Baoding, Hebei 071000 (CN); ZHANG, Shuai, Baoding, Hebei 071000 (CN); SHAN, Mingyuan, Baoding, Hebei 071000 (CN); WO, Congshan, Baoding, Hebei 071000 (CN); LIU, Xiu, Baoding, Hebei 071000 (CN); LI, Yan, Baoding, Hebei 071000 (CN); WENG, Haoyu, Baoding, Hebei 071000 (CN)
(74) Representative: Klunker IP Patentanwälte PartG mbB
(86) International application number: PCT/CN2020/075680
(87) International publication number: WO 2020/192309

(57) **Abstract**

A vehicle battery power control method and device, the vehicle battery power control method comprising: detecting the actual required power of a vehicle and the duration of the actual required power (S11); and according to the actual required power, a first battery charging and discharging power, and a second battery charging and discharging power and/or the duration of the actual required power, controlling the output power of a battery, the first battery charging and discharging power being less than the second battery charging and discharging power (S12). The described vehicle battery power control method and device may use a high charging and discharging power for power distribution, thereby increasing the usable power of the entire vehicle, and improving power performance without causing overcharging and over-discharging of power.

## Description

### FIELD

The present disclosure relates to the technical field of vehicle control, and particularly, to a method and a device for power control of a battery of a vehicle, and a vehicle.

### BACKGROUND

In a new energy vehicle, a power battery system functions as a power source for a power system of the vehicle. A storage battery has a characteristic of being passively charged and discharged in the power system. At present, the storage battery releases its capacity of charge and discharge power through a CAN for power distribution by a control system of the vehicle. A continuous discharge power for a period of time of the storage battery is calculated by a battery management system and is transmitted to a bus as a current charge and discharge power of the storage battery. There are two charge and discharge power of a storage battery, i.e., 10s charge and discharge power and 30s charge and discharge power. Only the 30s charge and discharge power of the battery is considered by a manufacturer performing the power distribution over the vehicle, and the 10s charge and discharge power is not considered in view of simplicity and conservation, which results in a reduced available power and a degraded dynamic performance of the vehicle.

### SUMMARY

In view of this, a method for power control of a battery of a vehicle is provided in the present disclosure, which can use higher charge and discharge power for power distribution, increasing available power of the vehicle, and improving power performance without causing overcharge or over-discharge.

To achieve the above purposes, a technical solution of the present disclosure is implemented as follows.

A method for power control of a battery of a vehicle is provided, including:
detecting an actual required power of the vehicle and a duration of the actual required power;
and controlling an output power of the battery based on the actual required power, a first charge and discharge power of the battery, a second charge and discharge power of the battery,
and/or the duration of the actual required power. The first charge and discharge power of the battery is lower than and the second charge and discharge power of the battery.

In an embodiment, a process of controlling an output power of the battery based on the actual required power, the first charge and discharge power of the battery, and the second charge and discharge power of the battery includes: controlling the output power of the battery to be equal to the actual required power, in a case where the actual required power is lower than or equal to the first charge and discharge power of the battery; and controlling the output power of the battery to be lower than the second charge and discharge power of the battery, in a case where the actual required power is higher than or equal to the second charge and discharge power of the battery.

In an embodiment, a process of controlling an output power of the battery based on the actual required power, the first charge and discharge power of the battery, the second charge and discharge power of the battery, and the duration of the actual required power includes: determining, in a case where the actual required power is in a first power interval, a relationship between the duration of the actual required power in the first power interval and a preset time, where the first power interval is defined as an interval in which a power is higher than the first charge and discharge power of the battery and lower than the second charge and discharge power of the battery; and controlling the output power of the battery based on the relationship between the duration of the actual required power in the first power interval and a first preset time.

In an embodiment, the controlling the output power of the battery based on the relationship between the duration of the actual required power in the first power interval and a first preset time includes: controlling the output power of the battery to be lower than the first charge and discharge power of the battery, in a case where the duration of the actual required power in the first power interval is greater than the first preset time; controlling the output power of the battery to be equal to the actual required power, in a case where the duration of the actual required power in the first power interval is less than or equal to the first preset time, and the actual required power never falls in the first power interval within a second preset time after the duration of the actual required power in the first power interval; and controlling the output power of the battery based on a relationship between a total time in which the actual required power is in the first power interval and the first preset time, in a case where the duration of the actual required power in the first power interval is less than or equal to the first preset time, and the actual required power falls in the first power interval at least once within a second preset time after the duration of the actual required power in the first power interval.

In an embodiment, the controlling the output power of the battery based on a relationship between a total time in which the actual required power is in the first power interval and the first preset time includes: controlling the output power of the battery to be lower than the first charge and discharge power of the battery, in a case where the total time in which the actual required power is in the first power interval is greater than the first preset time; and controlling the output power of the battery to be equal to the actual required power, in a case where the total time in which the actual required power is in the first power interval is less than or equal to the first preset time.

Compared with the conventional technology, the method for power control of a battery of a vehicle according to the present disclosure has the following advantages. In the method for power control of a battery of a vehicle of the present disclosure, an actual required power of the vehicle and a duration of the actual required power are detected, and an output power of the battery is controlled based on the actual required power, a first charge and discharge power of the battery (for example, a 30s charge and discharge power), a second charge and discharge power of the battery (for example, a 10s charge and discharge power), and/or the duration of the actual required power. According to the present disclosure, a relatively high charge and discharge power may be applied for power distribution, which can increase an available power of the vehicle as much as possible, and improve power performance without causing overcharge and over-discharge of power.

Another objective of the present disclosure is to provide a device for power control of a battery of a vehicle, in order to use a relatively high charge and discharge power for power distribution, increase an available power of the vehicle, and improve power performance without causing overcharge and over-discharge of power.

To achieve the above objective, the technical solution of the present disclosure is realized as follows.

A device for power control of a battery of a vehicle is provided, including a detecting unit and a control unit. The detecting unit is configured to detect an actual required power of the vehicle and a duration of the actual required power. The control unit is configured to control an output power of the battery based on the actual required power, a first charge and discharge power of the battery, a second charge and discharge power of the battery, and/or the duration of the actual required power. The first charge and discharge power of the battery is lower than the second charge and discharge power of the battery.

In an embodiment, the control unit controls the output power of the battery based on the actual required power, the first charge and discharge power of the battery, and the second charge and discharge power of the battery in the following manners: controlling the output power of the battery to be equal to the actual required power, in a case where the actual required power is lower than or equal to the first charge and discharge power of the battery; and controlling the output power of the battery to be lower than the second charge and discharge power of the battery, in a case where the actual required power is higher than or equal to the second charge and discharge power of the battery.

In an embodiment, the control unit controls the output power of the battery based on the actual required power, the first charge and discharge power of the battery, the second charge and discharge power of the battery, and the duration of the actual required power in the following manners: determining, in a case where the actual required power is in a first power interval, a relationship between the duration of the actual required power in the first power interval and a preset time, where the first power interval is defined as an interval in which a power is higher than the first charge and discharge power and lower than the second charge and discharge power of the battery; and controlling the output power of the battery based on the relationship between the duration of the actual required power in the first power interval and a first preset time.

In an embodiment, the control unit controls the output power of the battery based on the relationship between the duration of the actual required power in the first power interval and a first preset time in the following manners: controlling the output power of the battery to be lower than the first charge and discharge power of the battery, in a case where the duration of the actual required power in the first power interval is greater than the first preset time; controlling the output power of the battery to be equal to the actual required power, in a case where the duration of the actual required power in the first power interval is less than or equal to the first preset time, and the actual required power never falls in the first power interval within a second preset time after the duration of the actual required power in the first power interval; and controlling the output power of the battery based on a relationship between a total time in which the actual required power is in the first power interval and the first preset time, in a case where the duration of the actual required power in the first power interval is less than or equal to the first preset time, and the actual required power falls in the first power interval at least once within a second preset time after the duration of the actual required power in the first power interval.

In an embodiment, the control unit controls the output power of the battery based on a relationship between a total time in which the actual required power is in the first power interval and the first preset time in the following manners: controlling the output power of the battery to be lower than the first charge and discharge power of the battery, in a case where the total time in which the actual required power is in the first power interval is greater than the first preset time; and controlling the output power of the battery to be equal to the actual required power, in a case where the total time in which the actual required power is in the first power interval is less than or equal to the first preset time.

Compared with the conventional technology, the device for power control of a battery of a vehicle has the same advantages as the method for power control of a battery of a vehicle, and the advantages are not repeated herein.

Another objective of the present disclosure is to provide a vehicle, in order to use a relatively high charge and discharge power for power distribution, increase an available power of the vehicle, and improve power performance without causing overcharge and over-discharge of power.

To achieve the above objective, the technical solution of the present disclosure is realized as follows.

A vehicle is provided, including the device for power control of a battery of a vehicle as described above.

Compared with the conventional technology, the vehicle has the same advantages as the device for power control of a battery of a vehicle, and the advantages are not repeated herein.

Other features and advantages of the present disclosure are described in detail in the following embodiments.

### BRIEF DESCRIPTION OF THE DRAWINGS

The drawings constitute a part of the present disclosure and are intended to provide a further understanding of the present disclosure. The exemplary embodiments and descriptions thereof are intended to explain the present disclosure, and do not constitute an undue limitation to the present disclosure. In the drawings:
Figure 1 is a flow chart of a method for power control of a battery of a vehicle according to an embodiment of the present disclosure;
Figure 2 is a flow chart of the method for power control of a battery of a vehicle according to an embodiment of the present disclosure;
Figure 3 is a flow chart of a method for power control of a battery of a vehicle according to another embodiment of the present disclosure;
Figure 4 is a flow chart of the method for power control of a battery of a vehicle according to another embodiment of the present disclosure;
Figure 5 is a schematic diagram showing a curve of actual required power according to an embodiment of the present disclosure;
Figure 6 is a schematic diagram showing a curve of actual required power according to another embodiment of the present disclosure;
Figure 7 is a schematic diagram showing a curve of actual required power according to another embodiment of the present disclosure;
Figure 8 is a schematic diagram showing a curve of actual required power according to another embodiment of the present disclosure;
Figure 9 is a schematic diagram showing a curve of actual required power according to another embodiment of the present disclosure; and
Figure 10 is a schematic structural diagram of a device for power control of a battery of a vehicle according to an embodiment of the present disclosure.

Reference numerals are listed as follows:

| | | | |
|---|---|---|---|
| 1 | Detecting unit | 2 | Control unit |

### DETAILED DESCRIPTION

It should be noted that the embodiments in the present disclosure and features in the embodiments may be combined with each other as long as there is no conflict.

Hereinafter, the present disclosure is described in detail with reference to the drawings and in conjunction with the embodiments.

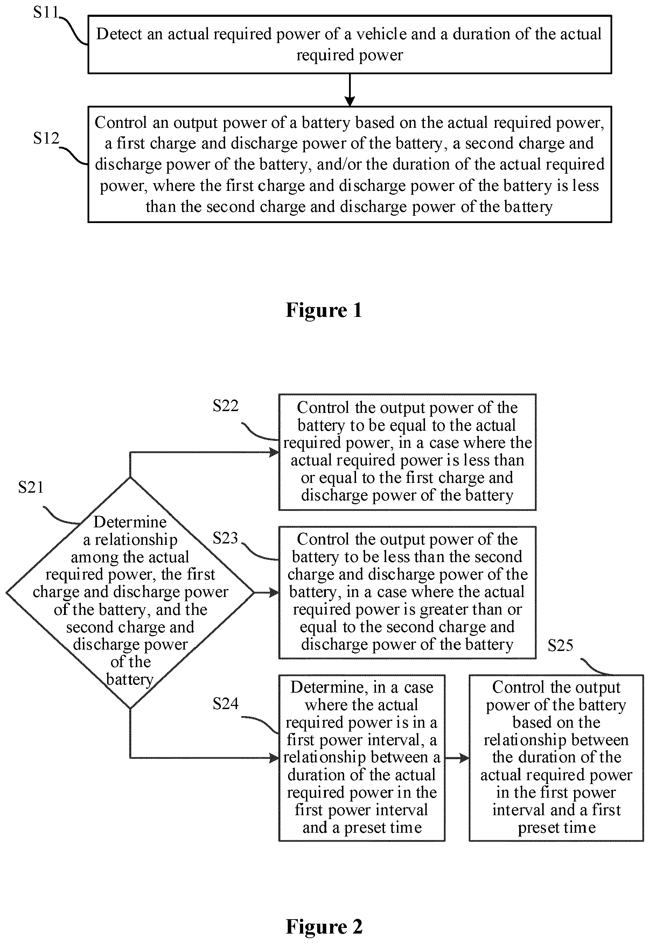

Figure 1 is a flow chart of a method for power control of a battery of a vehicle according to an embodiment of the present disclosure. As illustrated in Figure 1, the method for power control of a battery of a vehicle includes steps S 11 to S 12.

In step S11, an actual required power of the vehicle and a duration of the actual required power are detected.

In step S12, an output power of the battery is controlled based on the actual required power, a first charge and discharge power of the battery, a second charge and discharge power of the battery, and/or the duration of the actual required power. The first charge and discharge power of the battery is lower than the second charge and discharge power of the battery.

In the embodiment of the present disclosure, the first charge and discharge power of the battery may be a 30s charge and discharge power, which may be understood as a power for continuous charge and discharge in a long duration of 30s to substantially reach a peak in charging and discharging. The second charge and discharge power of the battery may be a 10s charge and discharge power, which may be understood as a power for charge and discharge in a short duration of 10s to substantially reach a peak in charging and discharging. The method for power control of a battery of a vehicle in the embodiment of the present disclosure is capable of allowing use of the 10s charge and discharge power for power distribution.

Specifically, in the embodiment of the present disclosure, the actual required power of the vehicle is first detected, and the duration of the actual required power is detected. The output power of the battery is then controlled based on the detected actual required power of the vehicle and the duration of the actual required power of the vehicle, in combination with the first charge and discharge power of the battery and the second charge and discharge power of the battery. Details are described as follows.

Figure 2 is a flow chart of the method for power control of a battery of a vehicle according to an embodiment of the present disclosure. As illustrated in Figure 2, the method includes steps S21 to S25.

In step S21, a relationship among the actual required power, the first charge and discharge power of the battery, and the second charge and discharge power of the battery is determined.

In step S22, the output power of the battery is controlled to be equal to the actual required power, in a case where the actual required power is lower than or equal to the first charge and discharge power of the battery.

In step S23, the output power of the battery is controlled to be lower than the second charge and discharge power of the battery, in a case where the actual required power is higher than or equal to the second charge and discharge power of the battery.

In step S24, a relationship between the duration of the actual required power and a preset time is determined in a case where the actual required power falls in a first power interval.

In step S25, the output power of the battery is controlled based on the relationship between the duration of the actual required power in the first power interval and a first preset time.

In this embodiment, depending on the relationship among the actual required power, the first charge and discharge power of the battery and the second charge and discharge power of the battery, there are three situations, including: 1) the actual required power being lower than or equal to the first charge and discharge power of the battery; 2) the actual required power being higher than or equal to the first charge and discharge power of the battery; and 3) the actual required power being in the first power interval (in the embodiment of the present disclosure, the first power interval is defined as an interval in which a power is higher than or equal to the first charge and discharge power of the battery and lower than or equal to the second charge and discharge power of the battery, which is defined only for convenience of description, not a limitation). For the first situation, requirements of the vehicle are satisfied without causing overcharge or over-discharge of the battery. Therefore, the output power of the battery is controlled to be equal to the actual required power, which may be understood as no control being performed (same for the following description). For the second situation, the output power of the battery is controlled lower than the second charge and discharge power of the battery. For the third situation, the output power of the battery may be controlled based on the relationship between the duration of the actual required power in the first power interval and the preset time. A specific control for the third situation is described in detail below.

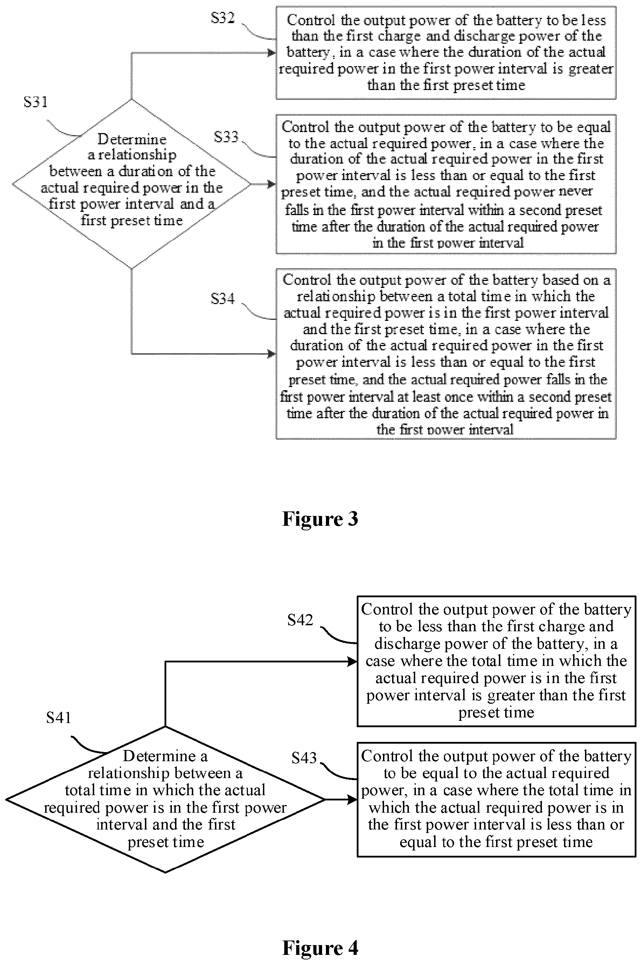

Figure 3 is a flow chart of a method for power control of a battery of a vehicle according to another embodiment of the present disclosure. As illustrated in Figure 3, the method includes steps S31 to S34.

In step S31, a relationship between the duration of the actual required power in a first power interval and a first preset time is determined.

In step S32, the output power of the battery is controlled to be lower than the first charge and discharge power of the battery, in a case where the duration of the actual required power in the first power interval is greater than the first preset time.

In step S33, the output power of the battery is controlled to be equal to the actual required power, in a case where the duration of the actual required power in the first power interval is less than or equal to the first preset time, and the actual required power never falls in the first power interval within a second preset time after the duration of the actual required power in the first power interval.

In step S34, the output power of the battery is controlled based on a relationship between a total time in which the actual required power is in the first power interval and the first preset time, in a case where the duration of the actual required power in the first power interval is less than or equal to the first preset time, and the actual required power falls in the first power interval at least once within a second preset time after the duration of the actual required power in the first power interval.

In the embodiment of the present disclosure, depending on the relationship between the duration of the actual required power in the first power interval and the first preset time, there are three situations, including: 1) the duration of the actual required power in the first power interval being greater than the first preset time; 2) the duration of the actual required power in the first power interval being less than or equal to the first preset time, and the actual required power never falls in the first power interval within the second preset time after the duration of the actual required power in the first power interval; and 3) the duration of the actual required power in the first power interval being less than or equal to the first preset time, and the actual required power falls in the first power interval at least once within the second preset time after the duration of the actual required power in the first power interval. For the first situation, the output power of the battery is controlled lower than the first charge and discharge power of the battery. For the second situation, requirements of the vehicle are satisfied without causing overcharge or over-discharge of the battery, and the output power of the battery may be controlled equal to the actual required power. For the third situation, the output power of the battery may be controlled based on a relationship between a total time in which the actual required power is in the first power interval and the first preset time. A specific control for the third situation is described in detail below.

Figure 4 is a flow chart of a method for power control of a battery of a vehicle according to another embodiment of the present disclosure. As illustrated in Figure 4, the method includes steps S41 to S43.

In step S41, a relationship between a total time in which the actual required power is in the first power interval and the first preset time is determined.

In step S42, the output power of the battery is controlled to be lower than the first charge and discharge power of the battery, in a case where the total time in which the actual required power is in the first power interval is greater than the first preset time.

In step S43, the output power of the battery is controlled to be equal to the actual required power, in a case where the total time in which the actual required power is in the first power interval is less than or equal to the first preset time.

In the embodiment of the present disclosure, depending on the relationship between the total time in which the actual required power is in the first power interval and the first preset time, there are two situations, including: 1) the total time in which the actual required power is in the first power interval being greater than the first preset time; 2) the total time in which the actual required power is in the first power interval being less than or equal to the first preset time. For the first situation, the output power of the battery is controlled lower than the first charge and discharge power of the battery. For the second situation, requirements of the vehicle are satisfied without causing overcharge or over-discharge of the battery, and the output power of the battery may be controlled to be equal to the actual required power.

Hereinafter, control manners in several situations of the present disclosure are explained in conjunction with graphs of power curves.

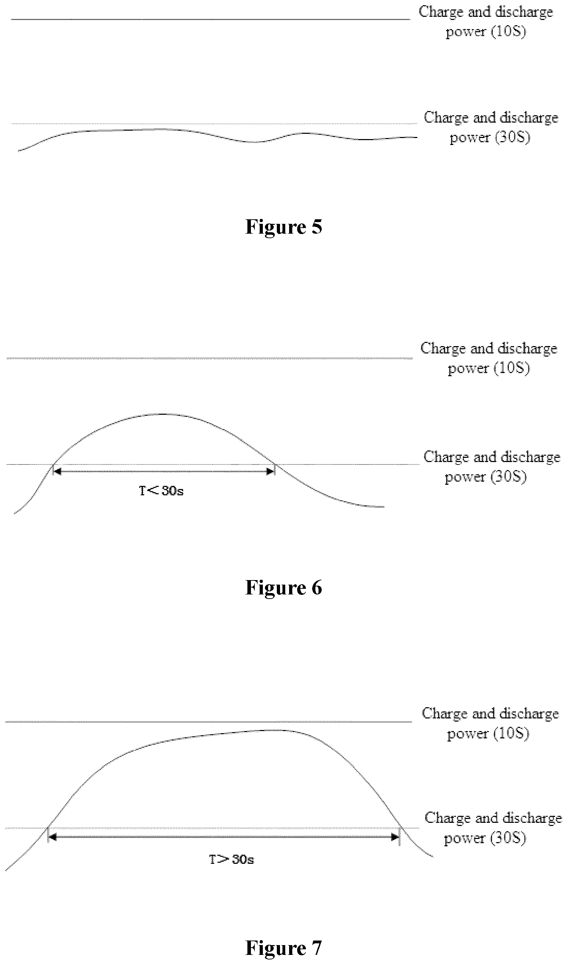

Figure 5 is a schematic graph showing a curve of an actual required power according to an embodiment of the present disclosure. As illustrated in Figure 5, in this embodiment, at a time instant at which the actual required power of the vehicle is lower than the 30s charge and discharge power of the battery, requirements of the vehicle are satisfied without causing overcharge or over-discharge of the battery, and a vehicle controller does not need to perform special processing during power distribution.

Figure 6 is a schematic graph showing a curve of an actual required power according to another embodiment of the present disclosure. As illustrated in Figure 6, in this embodiment, at a time instant at which a duration T1 of the actual required power of the vehicle higher than the 30s charge and discharge power and lower than the 10s charge and discharge power is less than 30s, requirements of the vehicle are satisfied without causing overcharge or over-discharge of the battery, and the vehicle controller does not need to perform special processing during power distribution.

Figure 7 is a schematic graph showing a curve of an actual required power according to another embodiment of the present disclosure. As illustrated in Figure 7, in this embodiment, at a time instant at which a duration T of the actual required power of the vehicle higher than the 30s charge and discharge power and lower than the 10s charge and discharge power is greater than a first preset time (for example, preferably 30s), the output power should be limited such that the actual power of the vehicle does not reach the 30s charge and discharge, in order to prevent the battery from overcharge and over-discharge.

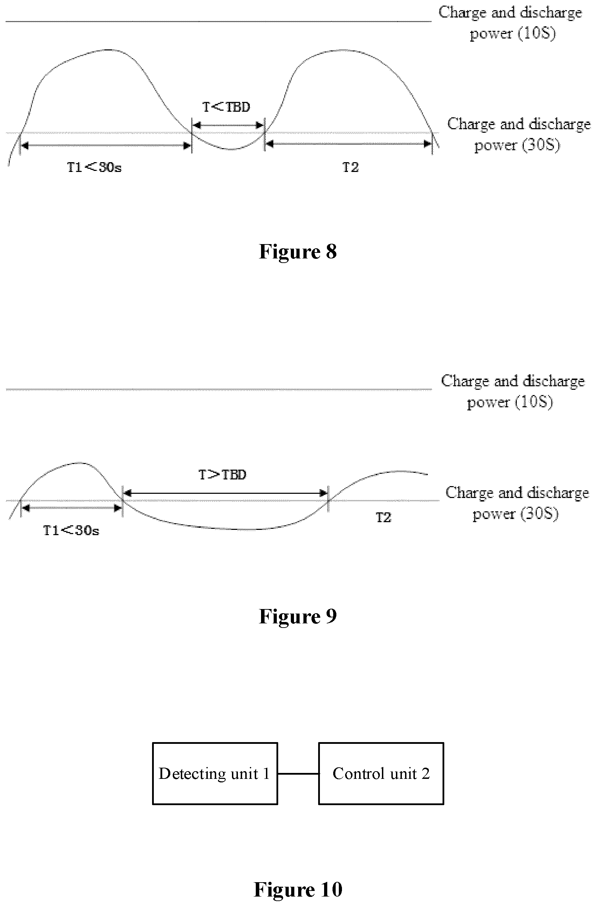

Figure 8 is a schematic graph showing a curve of an actual required power according to another embodiment of the present disclosure. As illustrated in Figure 8, the actual required power of the vehicle is higher than the 30s charge and discharge power and lower than the 10s charge and discharge power, and decreases to be lower than the 30s charge and discharge power within a first preset time (for example, preferably 30s). Then the required power becomes higher than the 30s charge and discharge power after a time period T, which is less than a second preset time (indicated as TBD in Figure 8), and lasts for a duration T2. The required power changes in a similar manner, becoming higher than the 30s charge and discharge power at intervals and lasting for durations T3, T4, and the like. In this case, the vehicle controller, when matching a charge and discharge power for the vehicle, should accumulate the durations and determine whether a total time exceeds the first preset time (for example, preferably 30s). If the total time in which the required power is higher than the 30s charge and discharge power and lower than the 10s charge and discharge power exceeds the first preset time, the output power should be limited such that the actual power of the vehicle does not reach the 30s charge and discharge power, in order to prevent the battery from overcharge and over-discharge.

Figure 9 is a schematic graph showing a curve of the actual required power according to another embodiment of the present disclosure. As illustrated in Figure 9, in this embodiment, the actual required power of the vehicle is higher than the 30s charge and discharge power and lower than the 10s charge and discharge power, and decreases to be lower than the 30s charge and discharge power within the first preset time (for example, preferably 30s). Then the required power becomes higher than the 30s charge and discharge power after a time period T which is greater than a second preset time (indicated as TBD in Figure 9), and keep being higher than the 30s charge and discharge power for a duration T2. In this case, a total time should be re-calculated as an accumulation of durations since the duration in which the actual required power becomes higher than the 30s charge and discharge power for the second time, and the previous duration in which the actual required power is higher than the 30s charge and discharge power is no longer considered. Subsequent processing is similar to the above embodiment.

According to the present disclosure, the 10s charge and discharge power of the battery is utilized through a control algorithm, and a battery power and a duration of the power are controlled to achieve an objective of increasing power performance and prevent the battery from overcharge or over-discharge. It is conducive to improving performances of starting acceleration and energy recovery, strengthening a power performance, and increasing a cruising range of the vehicle.

Figure 10 is a schematic structural diagram of a device for power control of a battery of a vehicle according to an embodiment of the present disclosure. As illustrated in Figure 10, the device for power control of a battery of a vehicle includes a detecting unit 1 and a control unit 2. The detecting unit 1 is configured to detect an actual required power of a vehicle and a duration of the actual required power. The control unit 2 is configured to control output power of the battery based on the actual required power, a first charge and discharge power of the battery, a second charge and discharge power of the battery and/or the duration of the actual required power. The first charge and discharge power of the battery is lower than and the second charge and discharge power of the battery.

In an embodiment, a process of controlling an output power of the battery based on the actual required power, the first charge and discharge power of the battery, and the second charge and discharge power of the battery is performed as follows. The output power of the battery is controlled to be equal to the actual required power, in a case where the actual required power is lower than or equal to the first charge and discharge power of the battery. The output power of the battery is controlled to be lower than the second charge and discharge power of the battery, in a case where the actual required power is higher than or equal to the second charge and discharge power of the battery.

In an embodiment, a process of controlling an output power of the battery based on the actual required power, the first charge and discharge power of the battery, the second charge and discharge power of the battery, and the duration of the actual required power is performed as follows. In a case where the actual required power is in a first power interval, a relationship between a duration of the actual required power in a first power interval and a preset time is determined. The first power interval is defined as an interval in which a power is higher than the first charge and discharge power of the battery and lower than the second charge and discharge power of the battery. The output power of the battery is controlled based on the relationship between the duration of the actual required power in the first power interval and the first preset time.

In an embodiment, a process of controlling an output power of the battery based on the relationship between the duration of the actual required power in the first power interval and the first preset time is performed as follows. The output power of the battery is controlled to be lower than the first charge and discharge power of the battery, in a case where the duration of the actual required power in the first power interval is greater than the first preset time. The output power of the battery is controlled to be equal to the actual required power, in a case where the duration of the actual required power in the first power interval is less than or equal to the first preset time, and the actual required power never falls in the first power interval within a second preset time after the duration of the actual required power in the first power interval. The output power of the battery is controlled based on a relationship between a total time in which the actual required power is in the first power interval and the first preset time, in a case where the duration of the actual required power in the first power interval is less than or equal to the first preset time, and the actual required power falls in the first power interval at least once within the second preset time after the duration of the actual required power in the first power interval.

In an embodiment, a process of controlling an output power of the battery based on a relationship between a total time in which the actual required power is in the first power interval and the first preset time is performed as follows, The output power of the battery is controlled to be lower than the first charge and discharge power of the battery, in a case where the total time in which the actual required power is in the first power interval is greater than the first preset time; The output power of the battery is controlled to be equal to the actual required power, in a case where the total time in which the actual required power is in the first power interval is less than or equal to the first preset time.

Embodiments of the device for power control of a battery of a vehicle are similar to the embodiments of the aforementioned method for power control of a battery of a vehicle, and are not repeated herein.

A vehicle is further provided according to an embodiment of the present disclosure. The vehicle includes the device for power control of a battery of a vehicle as described above.

Embodiments of the vehicle are similar to the embodiments of the device for power control of a battery of a vehicle, and are not repeated herein.

The embodiments described hereinabove are only preferred embodiments of the present disclosure, and are not intended to limit the scope of the present disclosure. Any modification, equivalent substitution, or improvement made within the spirit and the principle of the present disclosure shall fall within the protection scope of the present disclosure.

## Claims

1. A method for power control of a battery of a vehicle, comprising:
detecting an actual required power of the vehicle and a duration of the actual required power; and
controlling an output power of the battery based on the actual required power, a first charge and discharge power of the battery, a second charge and discharge power of the battery, and/or the duration of the actual required power, wherein the first charge and discharge power of the battery is lower than the second charge and discharge power of the battery.

2. The method for power control of a battery of a vehicle according to claim 1, wherein a process of controlling an output power of the battery based on the actual required power, the first charge and discharge power of the battery, and the second charge and discharge power of the battery comprises:
controlling the output power of the battery to be equal to the actual required power, in a case where the actual required power is lower than or equal to the first charge and discharge power of the battery; and
controlling the output power of the battery to be lower than the second charge and discharge power of the battery, in a case where the actual required power is higher than or equal to the second charge and discharge power of the battery.

3. The method for power control of a battery of a vehicle according to claim 1, wherein a process of controlling an output power of the battery based on the actual required power, the first charge and discharge power of the battery, the second charge and discharge power of the battery, and the duration of the actual required power comprises:
determining, in a case where the actual required power is in a first power interval, a relationship between the duration of the actual required power in the first power interval and a preset time, wherein the first power interval is defined as an interval in which a power is higher than the first charge and discharge power of the battery and lower than the second charge and discharge power of the battery; and
controlling the output power of the battery based on the relationship between the duration of the actual required power in the first power interval and a first preset time.

4. The method for power control of a battery of a vehicle according to claim 3, wherein the controlling the output power of the battery based on the relationship between the duration of the actual required power in the first power interval and a first preset time comprises:
controlling the output power of the battery to be lower than the first charge and discharge power of the battery, in a case where the duration of the actual required power in the first power interval is greater than the first preset time;
controlling the output power of the battery to be equal to the actual required power, in a case where the duration of the actual required power in the first power interval is less than or equal to the first preset time, and the actual required power never falls in the first power interval within a second preset time after the duration of the actual required power in the first power interval; and
controlling the output power of the battery based on a relationship between a total time in which the actual required power is in the first power interval and the first preset time, in a case where the duration of the actual required power in the first power interval is less than or equal to the first preset time, and the actual required power falls in the first power interval at least once within a second preset time after the duration of the actual required power in the first power interval.

5. The method for power control of a battery of a vehicle according to claim 4, wherein the controlling the output power of the battery based on a relationship between a total time in which the actual required power is in the first power interval and the first preset time comprises:
controlling the output power of the battery to be lower than the first charge and discharge power of the battery, in a case where the total time in which the actual required power is in the first power interval is greater than the first preset time; and
controlling the output power of the battery to be equal to the actual required power, in a case where the total time in which the actual required power is in the first power interval is less than or equal to the first preset time.

6. A device for power control of a battery of a vehicle, comprising a detecting unit and a control unit, wherein
the detecting unit is configured to detect an actual required power of the vehicle and a duration of the actual required power; and
the control unit is configured to control an output power of the battery based on the actual required power, a first charge and discharge power of the battery, a second charge and discharge power of the battery, and/or the duration of the actual required power, wherein the first charge and discharge power of the battery is lower than the second charge and discharge power of the battery.

7. The device for power control of a battery of a vehicle according to claim 6, wherein the control unit controls the output power of the battery based on the actual required power, the first charge and discharge power of the battery, and the second charge and discharge power of the battery in the following manners:
controlling the output power of the battery to be equal to the actual required power, in a case where the actual required power is lower than or equal to the first charge and discharge power of the battery; and
controlling the output power of the battery to be lower than the second charge and discharge power of the battery, in a case where the actual required power is higher than or equal to the second charge and discharge power of the battery.

8. The device for power control of a battery of a vehicle according to claim 6, wherein the control unit controls the output power of the battery based on to the actual required power, the first charge and discharge power of the battery, the second charge and discharge power of the battery, and the duration of the actual required power in the following manners:
determining, in a case where the actual required power is in a first power interval, a relationship between the duration of the actual required power in the first power interval and a preset time, wherein the first power interval is defined as an interval in which a power is higher than the first charge and discharge power and lower than the second charge and discharge power of the battery; and
controlling the output power of the battery based on the relationship between the duration of the actual required power in the first power interval and a first preset time.

9. The device for power control of a battery of a vehicle according to claim 8, wherein the control unit controls the output power of the battery based on the relationship between the duration of the actual required power in the first power interval and a first preset time in the following manners:
controlling the output power of the battery to be lower than the first charge and discharge power of the battery, in a case where the duration of the actual required power in the first power interval is greater than the first preset time;
controlling the output power of the battery to be equal to the actual required power, in a case where the duration of the actual required power in the first power interval is less than or equal to the first preset time, and the actual required power never falls in the first power interval within a second preset time after the duration of the actual required power in the first power interval; and
controlling the output power of the battery based on a relationship between a total time in which the actual required power is in the first power interval and the first preset time, in a case where the duration of the actual required power in the first power interval is less than or equal to the first preset time, and the actual required power falls in the first power interval at least once within a second preset time after the duration of the actual required power in the first power interval.

10. The device for power control of a battery of a vehicle according to claim 9, wherein the control unit controls the output power of the battery based on a relationship between a total time in which the actual required power is in the first power interval and the first preset time in the following manners:
controlling the output power of the battery to be lower than the first charge and discharge power of the battery, in a case where the total time in which the actual required power is in the first power interval is greater than the first preset time; and
controlling the output power of the battery to be equal to the actual required power, in a case where the total time in which the actual required power is in the first power interval is less than or equal to the first preset time.

11. A vehicle, comprising the device for power control of a battery of a vehicle according to any one of claims 6 to 10.
